# EUROPEAN PATENT SPECIFICATION

(11) **EP 3 920 469 B1**
(45) Date of publication and mention of the grant of the patent: **18.11.2026**
(21) Application number: 21158751.4
(22) Date of filing: 23.02.2021
(51) Int. Cl.: H04L 43/50, H04L 41/5009, H04L 41/50, G06F 11/34, H04L 43/0817

(54) **METHOD AND APPARATUS FOR STRESS TESTING, ELECTRONIC DEVICE AND COMPUTER READABLE MEDIUM**
VERFAHREN UND VORRICHTUNG ZUR BELASTUNGSPRÜFUNG, ELEKTRONISCHE VORRICHTUNG UND COMPUTERLESBARES MEDIUM
PROCÉDÉ ET APPAREIL DE TEST DE STRESS, DISPOSITIF ÉLECTRONIQUE ET SUPPORT LISIBLE PAR ORDINATEUR

(30) Priority: 05.06.2020 CN 202010507220
(43) Date of publication of application: 08.12.2021
(73) Proprietor: BEIJING BAIDU NETCOM SCIENCE AND TECHNOLOGY CO. LTD., 100085 Beijing (CN)
(72) Inventor: WANG, Zeyu, Beijing, 100085 (CN)
(74) Representative: V.O.

(56) References cited:
- CN-A- 109 660 421
- US-A1- 2015 169 291
- US-A1- 2017 242 774
- US-A1- 2019 258 517

## Description

### TECHNICAL FIELD

Embodiments of the present disclosure relate to the field of computer technology, particularly to the field of cloud computing technology, and more particularly to a method and apparatus for stress testing, an electronic device, and a computer readable medium.

### BACKGROUND

With the development of the Internet industry, more and more activities such as product promotions, new product releases appear. The main feature of such activities is that they may bring a flood of traffic, causing a big impact on the capacity of back-end services. In the context of the cloud era, infrastructures of most companies are built on the cloud. Therefore, based on cloud scenarios, how to do a reasonable capacity analysis and evaluation is an important issue faced by many Internet companies.

Stress testing is a method to test the maximum load capacity of a system by stressing the system. Analyzing and evaluating the capacity relies on effective stress testing. The accuracy and test efficiency of stress testing technology have a direct impact on the capacity analysis and evaluation of the system. US20170242774A1 provides a testing method which applies a test load (such as the number of users accessing or using a cloud service) to the cloud service.

### SUMMARY

A method and apparatus for stress testing, an electronic device, and a computer readable medium are provided.

In a first aspect, some embodiments of the present disclosure provide a method for stress testing according to claim 1.

In a second aspect, some embodiments of the present disclosure provide an apparatus for stress testing according to claim 4.

In a third aspect, some embodiments of the present disclosure provide an electronic device, the electronic device includes: at least one processor; and a memory, communicatively connected to the at least one processor; where, the memory, storing instructions executable by the at least one processor, the instructions, when executed by the at least one processor, cause the at least one processor to perform the method for stress testing according to any one of the implementations in the first aspect.

In a fourth aspect, some embodiments of the present disclosure provide a non-transitory computer readable storage medium, storing computer instructions, the computer instructions, being used to cause the computer to perform any one of the implementations in the first aspect.

The method and apparatus for stress testing provided by embodiments of the present disclosure, first initiating a stress testing request to a business system in a cloud service based on preset stress testing configuration information, then acquiring monitoring data of performance of the business system responding to the stress testing request, and finally determining query capacity information of the business system based on the preset stress testing configuration information and the monitoring data of the performance. Therefore, initiating the stress testing request to the business system based on the preset stress testing configuration of the present disclosure, may initiate a stress testing with preset requirements to the business system in the cloud service, and determine the query capacity information of the business system, based on the preset stress testing configuration and the monitoring data of the performance. Based on the consistency of the testing configuration and the monitoring data of the performance, stress testing on the business system in the cloud service may be performed conveniently and efficiently, and low-cost and accurate query capacity evaluation results may be obtained.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

The accompanying drawings are used to better understand the present solution and do not constitute a limitation to the present disclosure, in which:
Fig. 1 is a flowchart of a method for stress testing according to an embodiment of the present disclosure;
Fig. 2 is a diagram of an example system architecture in which an embodiment of the present disclosure may be implemented;
Fig. 3 is a flowchart of a method for stress testing according to another embodiment of the present disclosure;
Fig. 4 is a flowchart of a method for stress testing according to a third embodiment of the present disclosure;
Fig. 5 is a schematic structural diagram of an apparatus for stress testing according to an embodiment of the present disclosure; and
Fig. 6 is a block diagram of an electronic device used to implement the method for stress testing according to an embodiment of the present disclosure.

### DETAILED DESCRIPTION OF EMBODIMENTS

The following describes example embodiments of the present disclosure with reference to the accompanying drawings, which include various details of the embodiments of the present disclosure to facilitate understanding, and should be regarded as merely exemplary. Therefore, those of ordinary skill in the art should realize that various changes and modifications may be made to the embodiments described herein without departing from the scope of the present disclosure. Likewise, for clarity and conciseness, descriptions of well-known functions and structures are omitted in the following description.

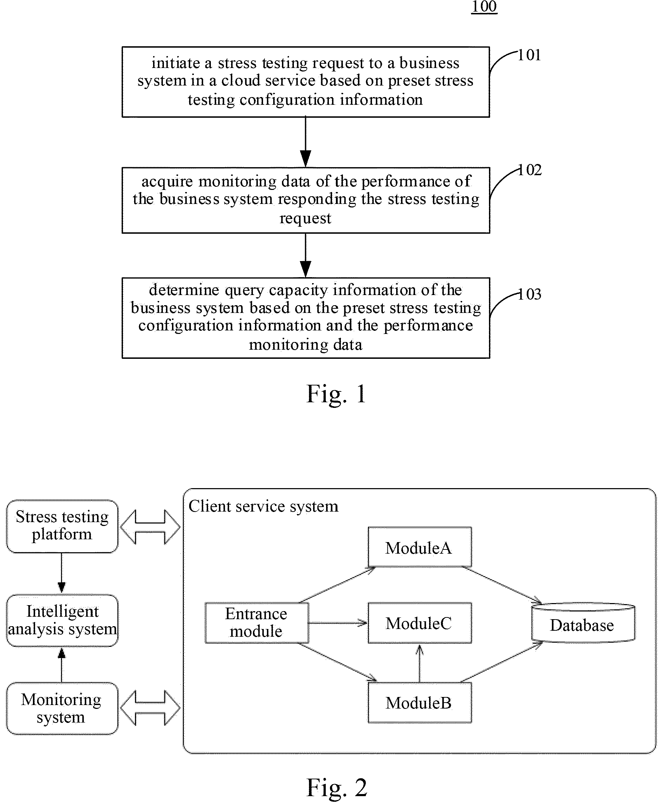

Fig. 1 shows a flow 100 of a method for stress testing according to an embodiment of the present disclosure. The method for stress testing includes the following steps:
Step 101, initiating a stress testing request to a business system in a cloud service based on preset stress testing configuration information.

In an embodiment, the preset stress testing configuration information is a collection of key configuration information for stress testing, including at least one testing traffic. The stress testing configuration information may also include configuration information such as stress testing object, stressed object, sizes of traffics, ratios of elements, or traffic content. In addition to the preset stress testing configuration information, the stress testing request may also include an identifier of the business system in the cloud service, and the like. The identifier of the business system may be used to find a to-be-tested business system. Particularly, the identifier of the business system may be the domain name of the system entrance or IP address of the business system.

The cloud service is the internet-based increasing, using, and interacting mode of related services, where the provision of dynamic, easily scalable and often virtualized resources through the Internet is generally involved. The cloud service refers to obtaining demanded service through the network in an on-demand and easily scalable method. The cloud service may put software, hardware, and/or data that are required by an enterprise into the cloud network, to build a corresponding business system. Cloud service providers provide enterprises with service resources, including servers, virtual machines, network segments, etc..

Currently, two common cloud services are normally adopted: public cloud and private cloud. Public cloud is the most basic service. The system resources of one service provider may be shared by a plurality of clients. The client may enjoy professional IT services without setting up any equipment and equipping management personnel.

Private cloud is built for being used by a single client, thus providing the most effective control over data, security and service quality. The client owns the infrastructure and may control the mode of how applications are deployed on this infrastructure. Private cloud may be deployed within the firewall of the client's data center, or may be deployed in a safe colocation platform. The core attribute of the private cloud lies in proprietary resources.

In the present embodiment, the business system is a system that shares cloud service resources and implements a certain business function (payment, storage, and authority). As shown in Fig. 2, the business system may be, for example, a customer service system. The customer service system includes an entrance module, a database, and a plurality of business modules A, B, and/or C. By the method for stress testing provided in embodiments of the present disclosure, capacity evaluation of the business system may be realized.

A business system's query capacity information is information representing the amount of business queries that the business system can load, which may include but is not limited to at least one of the following: maximum rate of business queries, maximum amount of business queries, or maximum amount of business queries or maximum rate of business queries of various preset types of business queries.

In an embodiment, the executing body on which the method for stress testing operates may first acquire the preset stress testing configuration information before initiating the stress testing request to the business system in the cloud service. Particularly, the preset stress testing configuration information may be obtained by acquiring from a user terminal or reading from memory. The preset stress testing configuration information may be information pre-configured by the executing body, or may be changeable information determined by the executing body, and may be reused.

In some alternative implementations of the present embodiment, acquiring the stress testing configuration information includes acquiring the preset stress testing configuration information configured by a user of the business system. The executing body may acquire the preset stress testing configuration information configured by the user through the user terminal, which improves the accuracy and real-time of acquiring the stress testing configuration information. Further, a stress testing platform as shown in Fig. 2 may also be set up so that the user of the business system may access the stress testing platform to configure the preset stress testing configuration information for the business system; when the user has configured the preset stress testing configuration information on the stress testing platform or the user terminal, that is, when there is historical configuration information on the stress testing platform or the user terminal, the executing body may acquire the historical configuration information as the stress testing configuration information corresponding to the current stress testing request, improving a reuse degree of the stress testing configuration information.

A stress testing request may be initiated to the to-be-tested business system based on the above preset stress configuration information. In an embodiment, an access operation of the user may be simulated based on at least one configured testing traffic, to initiate an access request to the business system and wait for a feedback from the business system.

Step 102, acquiring monitoring data of the performance of the business system responding the stress testing request.

In the present embodiment, the business system may respond to the stress testing request, and perform corresponding data processing and feedback operation based on the content of the stress testing request.

The monitoring data of the performance is monitoring data for evaluating the performance of the business system. The monitoring data of the performance may include but not limited to at least one of the following: CPU usage rate, memory usage rate, read/write usage rate, in and out traffic of the CPU, request response time length, or error code. The monitoring data of the performance may include an accuracy indicator, a feedback time indicator of a feedback result feedback from the business system and other data that represent the processing efficiency or processing capacity of the business system (for example, response time of the business system to the stress testing request), and/or performance data that represent the resource usage of the business system during stress testing (such as IO data of a network card).

Step 103, determining query capacity information of the business system based on the preset stress testing configuration information and the performance monitoring data.

In the present embodiment, the business system's query capacity information refers to the maximum query amount that the business system can withstand or support at the same time, that is, stress testing capacity. The query capacity information is information about the stress testing capacity of the business system. For example, the query capacity information includes the maximum query amount information of various query categories, and may also include a resource bottleneck module among the business modules, a resource expansion demand of the business system, etc.

The performance of the business system may be evaluated based on the monitoring data of the performance, for example, a level of the performance of the business system may be determined by the interval to which values of the performance data belongs. Then, the performance of the business system under a corresponding testing traffic may be determined based on the corresponding testing traffic in the stress testing configuration information. In addition, based on the performance of the business system tested under each testing traffic, it may determine whether the business system can load the corresponding testing traffic, or determine the maximum testing traffic that the business system can load, and then determine the business system's query capacity information.

Different analysis solutions may be formulated for different monitoring data of the performance. For example, for performance monitoring data corresponding to the testing configuration information fed back by the stress testing platform, an average value of the performance monitoring data within a set time may be obtained. In response to the average value being within threshold range, it may be determined that the business system's query capacity information meets the stress testing request, that is, it may be determined that the business system's query capacity is not lower than the amount of queries in the stress testing request.

The method for stress testing provided by embodiments of the present disclosure, first initiating a stress testing request to a business system in a cloud service based on preset stress testing configuration information, then acquiring monitoring data of the performance of that the business system responds to the stress testing request, and finally determining the business system's query capacity information based on the preset stress testing configuration information and the monitoring data of the performance. Therefore, initiating the stress testing request to the business system based on the preset stress testing configuration of the present disclosure, may initiate a stress testing with preset requirements to the business system in the cloud service, and determine the query capacity information of the business system, based on the preset stress testing configuration and the monitoring data of the performance. Based on the consistency of the test configuration and the monitoring data of the performance, stress testing on the business system in the cloud service may be performed conveniently and efficiently, and low-cost and accurate query capacity evaluation results may be obtained.

Fig. 2 is a diagram of an example system architecture in which embodiments of the present disclosure may be implemented. In this architecture diagram, the intelligent analysis system may be used as the executing body of the above embodiment on which the method for stress testing operates. Further, the system architecture diagram also includes a stress testing platform, a client service system, and a monitoring system. The stress testing platform provides a configuration interface for stress testing configuration information. The operation and maintenance staff of the client service system may configure the stress testing configuration information through the stress testing platform, to initiate a stress testing request to the client service system in cloud service. The client service system includes an entrance module, a database, and a plurality of business modules A, B, and C. The stress testing platform and the monitoring system access the various business modules A, B, and C in the client service system through the entrance module, and the business modules A and B may also store their respective information in the database.

Further, the stress testing configuration information includes at least one testing traffic. The intelligent analysis system may also initiate the stress testing request to the client service system in the cloud service through the stress testing platform, and the stress testing platform may also record behavior data of the client service system responding to the stress testing request, such as response time, and send the behavior data to the intelligent analysis system.

Further, the monitoring system shown in Fig. 2 may be a monitoring system provided by the cloud service. After the client service system receives the stress testing request, the monitoring system shown in Fig. 2 monitors the usage of various resources in the client service system. The monitoring system may also send the usage of the resources in the client service system to the intelligent analysis system.

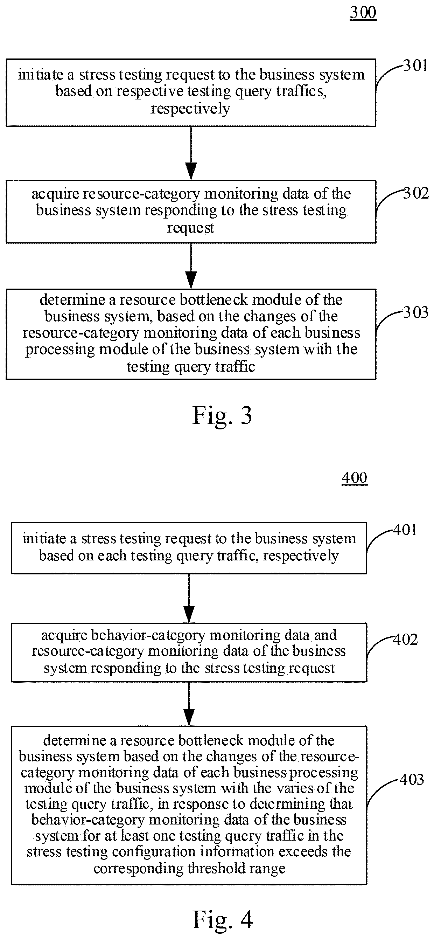

In another embodiment of the present disclosure, the monitoring data of the performance includes: resource-category monitoring data representing a resource occupancy occupied by that the business system and each business module included in the business system process the stress testing request. With further reference to Fig. 3, Fig. 3 shows a flow 300 of a method for stress testing according to another embodiment of the present disclosure. The method for stress testing includes the following steps:
Step 301, initiating a stress testing request to the business system based on respective testing query traffics, respectively.

In an embodiment, a testing query traffic is a traffic initiated onto the business system, and correspondingly, the stress testing configuration information includes a configuration demand of the testing query traffic. The stress testing configuration information corresponding to a certain testing query traffic includes: stress testing object, stress testing content, traffic size, traffic ratio, threshold of the response time, and ratio threshold of a returned error. The stress testing object is, for example, the client service system. The stress testing content is, for example, the content of the testing query traffic. The traffic size is, for example, an upper limit: 10w qps. The traffic ratio may include, for example, login category accounts for 50%, browsing category accounts for 30%, and payment category accounts for 20%.

Step 302, acquiring resource-category monitoring data of the business system responding to the stress testing request.

In an embodiment, the resource-category monitoring data of the resource occupancy includes any of: CPU usage rate, memory usage rate of each business module in the business system.

Step 303, determining a resource bottleneck module of the business system, based on changes of the resource-category monitoring data of each business processing module of the business system with the changes of the testing query traffic.

In an embodiment, query traffic of the stress testing request may be gradually increased within a range limited within the upper limit of the query traffic configured in the stress testing configuration information, to test the changes of the resource-category monitoring data of the business system with the traffic increase. If the resource-category monitoring data has a sudden change (a sudden significant increase or decrease) at a certain traffic position, the business system reaches a bottleneck status. In this regard, the changes of the resource-category monitoring data of different business processing modules in the business system with the changes of the query traffic are further analyzed, to further determine the resource bottleneck module therefrom. The resource bottleneck module of the business system may be determined based on the idea of the barrel principle. For the present embodiment, the maximum query traffic that the business system can support depends on the business module with the weakest ability to support the stress testing request in the business modules, and the business module with the weakest ability to support the stress testing request is the resource bottleneck module.

In an embodiment, during monitoring the changes of the resource-category monitoring data of the business modules with the changes of the query traffic, in the resource-category monitoring data of each business processing module of the business system, the business processing module that first undergoes a sudden change (for example, a sudden decrease or a sudden increase) with the increase of the testing query traffic, may be determined as the resource bottleneck module of the business system.

The method for stress testing provided by the present embodiment, during the stress testing, may respectively initiate each stress testing request to the business system based on each testing query traffic, and determine the resource bottleneck module of the business system based on the changes of the resource-category monitoring data of each business processing module of the business system with the testing query traffics. The resource bottleneck module may be accurately located, thereby obtaining more targeted assessment results, providing effective support for the resource configuration of the business system, and effectively preventing the business system from being impacted by traffic and unable to operate normally when the traffic peak comes.

In some alternative implementations of the present embodiment, the monitoring data of the performance include behavior-category monitoring data representing responsiveness of the business system.

Particularly, the behavior-category monitoring data include, but not limited to, at least one of the following: average response time, response time at 90 percentile, or the proportion of returned errors.

It is further disclosed that the determining query capacity information of the business system based on the preset stress testing configuration information and the monitoring data of the performance, includes: determining the query capacity of the business system meets a demand of a maximum testing query traffic, in response to determining that behavior-category monitoring data of the business system targeting at the maximum testing query traffic in the stress testing configuration information does not exceed a corresponding threshold range.

The threshold range corresponding to the behavior-category monitoring data may be set based on the type of the behavior-category monitoring data, where the categories of the behavior-category monitoring data include time type and fault tolerance rate type. As an example, when the behavior-category monitoring data are data of time type, the threshold of the behavior-category monitoring data may be set to 1000ms; and when the behavior-category monitoring data are data of fault tolerance type, the threshold of the behavior-category monitoring data may be set to proportion of returned error of 90%.

Further, the maximum testing query traffic is the upper limit of all testing query traffics configured in the stress testing configuration information. When the query capacity information of the business system meets the demand for the maximum testing query traffic, the query capacity information of the business system is capacity information that meets the demand for the stress testing. This implementation may perform threshold analysis targeting at the behavior-category monitoring data, so as to quickly evaluate the query capacity of the business system.

In another embodiment of the present disclosure, the monitoring data of the performance include behavior-category monitoring data representing responsiveness of the business system, and the monitoring data of the performance also include: resource-category monitoring data which represents resource occupancies occupied by that the business system and each business module included in the business system process the stress testing request. That is, the monitoring data of the performance includes behavior-category monitoring data and resource-category monitoring data. With further reference to Fig. 4, Fig. 4 shows a flow 400 of a method for stress testing. The method for stress testing includes the following steps:
Step 401, initiating a stress testing request to the business system based on each testing query traffic, respectively.
Step 402, acquiring behavior-category monitoring data and resource-category monitoring data of the business system responding to the stress testing request.
Step 403, in response to determining that behavior-category monitoring data of the business system for at least one testing query traffic in the stress testing configuration information exceeds the corresponding threshold range, determining a resource bottleneck module of the business system based on changes of the resource-category monitoring data of each business processing module of the business system with the varies of the testing query traffic.

If the behavior-category monitoring data of the business system for the at least one testing query traffic in the stress testing configuration information exceeds the corresponding threshold range, it indicates that the query capacity information of the business system does not meet the demand for the maximum testing query traffic.

The behavior-category monitoring data of the testing query traffic is first evaluated. When at least one behavior-category monitoring data exceeds the threshold range, the resource bottleneck module is further determined based on the changes of the resource-category monitoring data with the varies of the testing query traffic. The efficiency of the analysis on the stress testing result and the reliability of the analysis results are improved based on the progressive capacity evaluation strategy on business system.

It is shown in Fig. 4 that, after the step of determining a resource bottleneck module of the business system, based on changes of the resource-category monitoring data of each business processing module of the business system with the varies of the testing query traffic, resource expansion requirement information of the business system may also be estimated based on resource-category monitoring data corresponding to the resource bottleneck module.

The resource bottleneck module is a business module in the business system that first experience a sudden resource change during the stress testing. In the process of monitoring changes of the resource-category monitoring data of each business processing module with the varies of the testing query traffic, the executing body on which the method for stress testing operates determines the resource bottleneck module of the business system by determining whether the resource-category monitoring data of each business processing module of the business system experience a sudden resource change (for example, a sudden decrease or a sudden increase).

Further, the resource expansion of the business system may be estimated based on the slope or ratio of the sudden change of the resource bottleneck module.

The performance monitoring data may include: behavior-category monitoring data and resource-category monitoring data. After determining the resource bottleneck module of the business system, the resource expansion requirement information of the business system is estimated based on the resource-category monitoring data corresponding to the resource bottleneck module, which provides a basis for the expansion of the business system and provides effective support for the expansion of the business system.

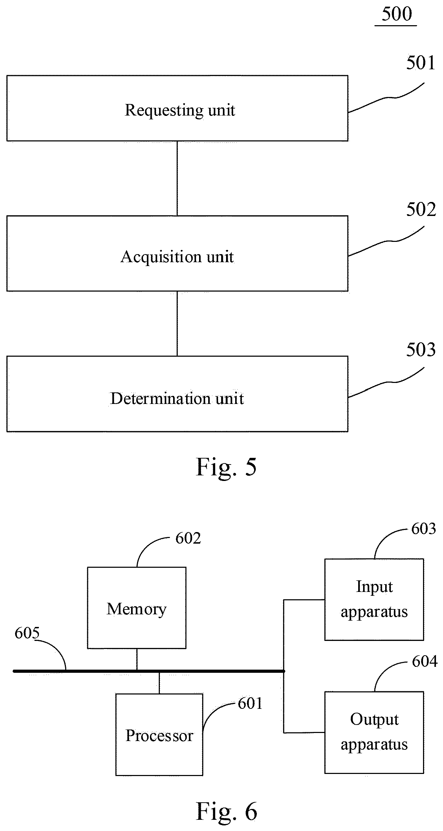

With further reference to Fig. 5, as an implementation of the method shown in the above figures, an embodiment of the present disclosure provides an apparatus for stress testing, and apparatus embodiments correspond to the method embodiments shown in Fig. 1. The apparatus may be applied to various electronic devices.

As shown in Fig. 5, an apparatus 500 for stress testing of the present embodiment includes: a requesting unit 501, an acquisition unit 502 and a determination unit 503. The requesting unit 501 may be configured to initiate a stress testing request to a business system in a cloud service based on preset stress testing configuration information, the preset stress testing configuration information comprising at least one testing traffic. The acquisition unit 502 may be configured to acquire monitoring data of a performance of the business system responding to the stress testing request. The determination unit 503 may be configured to determine query capacity information of the business system based on the preset stress testing configuration information and the monitoring data of the performance.

In an embodiment, in the apparatus 500 for stress testing, for the processing detail and the technical effects of the requesting unit 501, the acquisition unit 502 and the determination unit 503, reference may be made to the related descriptions of step 101, step 102, and step 103 in the corresponding embodiment of Fig. 1 respectively, and detailed description thereof will be omitted.

In some alternative implementations of the present embodiment, the apparatus 500 for stress testing also includes: a configuration unit (not shown in the figure). The configuration unit may be configured to acquire the preset stress testing configuration information configured by a user of the business system.

In some alternative implementations of the present embodiment, the requesting unit 501 is further configured to initiate the stress testing request to the business system based on each testing query traffic, respectively; the monitoring data of the performance include: resource-category monitoring data representing resource occupancies of that the business system and each business module included in the business system process the stress testing request; and the determination unit 503 includes: a resource module (not shown in the figure). The resource module may be configured to: determining a resource bottleneck module of the business system based on changes of the resource-category monitoring data of each business processing module of the business system with varies of the testing query traffic.

It is further disclosed that the monitoring data of the performance includes behavior-category monitoring data representing responsiveness of the business system; and the determination unit 503 includes: a behavior module (not shown in the figure). The behavior module may be configured to determine query capacity of the business system meets a demand of a maximum testing query traffic, in response to determining that behavior-category monitoring data of the business system targeting at the maximum testing query traffic in the stress testing configuration information does not exceed a corresponding threshold range.

The requesting unit 501 may further be configured to initiate the stress testing request to the business system based on each testing query traffic, respectively. The performance monitoring data of the performance further include: resource-category monitoring data representing resource occupancies of that the business system and each business module included in the business system process the stress testing request. The determination unit 503 also includes: a resource module (not shown in the figure). The resource module may be configured to: in response to determining that the behavior-category monitoring data of the business system targeting at the maximum testing query traffic in the stress testing configuration information exceeds the corresponding threshold range, determining a resource bottleneck module of the business system based on changes of the resource-category monitoring data of each business processing module of the business system with varies of the testing query traffic.

The determination unit 503 may further include: an expansion module (not shown in the figure). The expansion module may be configured to estimate resource expansion requirement information of the business system based on resource-category monitoring data corresponding to the resource bottleneck module.

The method and apparatus for stress testing provided by embodiments of the present disclosure, first initiating a stress testing request to a business system in a cloud service based on preset stress testing configuration information, then acquiring monitoring data of performance of the business system responding to the stress testing request, and finally determining business query capacity information of the business system based on the preset stress testing configuration information and the monitoring data of the performance. Therefore, initiating the stress testing request to the business system based on the preset stress testing configuration of the present disclosure, may initiate a stress testing with preset requirements to the business system in the cloud service, and determine the query capacity information of the business system based on the preset stress test configuration and the monitoring data of the performance. Based on the consistency of the testing configuration and the performance monitoring data, stress testing on the business system in the cloud service may be performed conveniently and efficiently, and low-cost and accurate query capacity evaluation results may be obtained.

According to an embodiment of the present disclosure, an electronic device and a readable storage medium are provided.

As shown in Fig. 6, is a block diagram of an electronic device of the method for stress testing according to embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

According to some embodiments of the present disclosure, an electronic device and a readable storage medium are provided.

As shown in Fig. 6, which is a block diagram of an electronic device of a method for stress testing according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses 605, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multiprocessor system. In Fig. 6, one processor 601 is used as an example.

The memory 602 is a non-transitory computer readable storage medium provided by the present disclosure. The memory stores instructions executable by at least one processor, so that the at least one processor performs the method for stress testing provided by the present disclosure. The non-transitory computer readable storage medium of the present disclosure stores computer instructions for causing a computer to perform the method for stress testing provided by the present disclosure.

The memory 602, as a non-transitory computer readable storage medium, may be used to store non-transitory software programs, non-transitory computer executable programs and modules, such as program instructions/modules corresponding to the method for stress testing in the embodiments of the present disclosure (for example, the requesting unit 501, the acquisition unit 502 and the determination unit 503 as shown in Fig. 5). The processor 601 executes the non-transitory software programs, instructions, and modules stored in the memory 602 to execute various functional applications and data processing of the server, that is, to implement the method for stress testing in the foregoing method embodiments.

The memory 602 may include a storage program area and a storage data area, where the storage program area may store an operating system and at least one function required application program; and the storage data area may store data created by the use of the electronic device of the method for stress testing. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device of the method for stress testing through a network. Examples of the above network include but are not limited to the Internet, intranet, local area network, mobile communication network, and combinations thereof.

The electronic device of the method for stress testing may further include: an input apparatus 603 and an output apparatus 604. The processor 601, the memory 602, the input apparatus 603, and the output apparatus 604 may be connected through the bus 605 or in other methods. In Fig. 6, connection through the bus 605 is used as an example.

The input apparatus 603 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

The above specific embodiments do not constitute limitation on the protection scope of the present disclosure, which is solely determined by the appended claims.

## Claims

1. A method for stress testing, comprising:
initiating (101) a stress testing request to a business system in a cloud service based on preset stress testing configuration information, the preset stress testing configuration information comprising testing query traffics, wherein the stress testing configuration information corresponding to a certain testing query traffic includes: stress testing object, stress testing content, an upper limit of the traffic, traffic ratio, threshold of the response time, and ratio threshold of a returned error, wherein the business system is a system that shares cloud service resources and implements a certain function such as payment, storage and authority, and the business system includes different business processing modules;
acquiring (102) monitoring data of a performance of the business system responding to the stress testing request; and
determining (103) query capacity information of the business system based on the preset stress testing configuration information and the monitoring data of the performance,
wherein the initiating (101) the stress testing request to the business system in the cloud service based on the preset stress testing configuration information, comprises:
initiating (301), respectively, the stress testing request to the business system based on the respective testing query traffics;
the monitoring data of the performance comprises: resource-category monitoring data including any one of: central processing unit, CPU, usage rate, memory usage rate of each business module in the business system; and
the determining (103) the query capacity information of the business system based on the preset stress testing configuration information and the monitoring data of the performance, comprises:
determining (303) a resource bottleneck module of the business system based on changes of the resource-category monitoring data of the different business processing modules of the business system with changes of the testing query traffic, wherein query traffic of the stress testing request is gradually increased within a range limited within the upper limit of the query traffic configured in the stress testing configuration information, and a business processing module that first undergoes a sudden change with increase of the testing query traffic is determined as the resource bottleneck module of the business system.

2. The method according to claim 1, wherein the determining (103) the query capacity information of the business system based on the preset stress testing configuration information and the monitoring data of the performance, further comprises:
estimating resource expansion requirement information of the business system based on resource-category monitoring data corresponding to the resource bottleneck module.

3. The method according to any one of the preceding claims, further comprising:
acquiring the preset stress testing configuration information configured by a user of the business system.

4. An apparatus for stress testing, the apparatus comprising:
a requesting unit (501), configured to initiate (101) a stress testing request to a business system in a cloud service based on preset stress testing configuration information, the preset stress testing configuration information comprising testing query traffics, wherein the stress testing configuration information corresponding to a certain testing query traffic includes: stress testing object, stress testing content, an upper limit of the traffic, traffic ratio, threshold of the response time, and ratio threshold of a returned error, wherein the business system is a system that shares cloud service resources and implements a certain function such as payment, storage and authority, and the business system includes different business processing modules;
an acquisition unit (502), configured to acquire (102) monitoring data of a performance of the business system responding to the stress testing request; and
a determination unit (503), configured to determine (103) query capacity information of the business system based on the preset stress testing configuration information and the monitoring data of the performance,
the requesting unit (501) is further configured to initiate, respectively, the stress testing request to the business system based on testing query traffics;
the monitoring data of the performance comprise: resource-category monitoring data including any one of: central processing unit, CPU, usage rate, memory usage rate of each business module in the business system; and
the determination unit (503) comprises a resource module, configured to determine (303) a resource bottleneck module of the business system based on changes of the resource-category monitoring data of the different business processing modules of the business system with changes of the testing query traffic, wherein query traffic of the stress testing request is gradually increased within a range limited within the upper limit of the query traffic configured in the stress testing configuration information, and a business processing module that first undergoes a sudden change with increase of the testing query traffic is determined as the resource bottleneck module of the business system.

5. The apparatus according to claim 4, wherein the determination unit (503) further comprises:
an expansion module, configured to estimate resource expansion requirement information of the business system based on resource-category monitoring data corresponding to the resource bottleneck module.

6. The apparatus according to any one of claims 4-5, further comprising:
a configuration unit, configured to acquire the preset stress testing configuration information configured by a user of the business system.

7. An electronic device, comprising:
at least one processor; and
a memory, communicatively connected to the at least one processor; wherein,
the memory, storing instructions executable by the at least one processor, the instructions, when executed by the at least one processor, cause the at least one processor to perform the method according to any one of claims 1-3.

8. A non-transitory computer readable storage medium, storing computer instructions, the computer instructions, being used to cause the computer to perform the method according to any one of claims 1-3.

## Patentansprüche

1. Verfahren zur Belastungsprüfung, umfassend:
Initiieren (101) einer Belastungsprüfungsanforderung an ein Geschäftssystem in einem Cloud-Dienst auf der Grundlage voreingestellter Belastungsprüfungskonfigurationsinformationen, wobei die voreingestellten Belastungsprüfungskonfigurationsinformationen Prüfungsabfrageverkehre umfassen, wobei die Belastungsprüfungskonfigurationsinformationen, die einem bestimmten Prüfungsabfrageverkehr entsprechen, Folgendes einschließen: ein Belastungsprüfungsobjekt, einen Belastungsprüfungsinhalt, eine Obergrenze des Verkehrs, ein Verkehrsverhältnis, einen Schwellenwert der Antwortzeit und einen Verhältnisschwellenwert eines zurückgegebenen Fehlers, wobei das Geschäftssystem ein System ist, das Cloud-Dienst-Ressourcen gemeinsam nutzt und eine bestimmte Funktion wie etwa Zahlung, Speicherung und Berechtigung implementiert, und wobei das Geschäftssystem unterschiedliche Geschäftsverarbeitungsmodule einschließt;
Erfassen (102) von Überwachungsdaten eines Verhaltens des Geschäftssystems beim Antworten auf die Belastungsprüfungsanforderung; und
Bestimmen (103) von Abfragekapazitätsinformationen des Geschäftssystems auf der Grundlage der voreingestellten Belastungsprüfungskonfigurationsinformationen und der Überwachungsdaten des Verhaltens,
wobei das Initiieren (101) der Belastungsprüfungsanforderung an das Geschäftssystem in dem Cloud-Dienst auf der Grundlage der voreingestellten Belastungsprüfungskonfigurationsinformationen Folgendes umfasst:
jeweiliges Initiieren (301) der Belastungsprüfungsanforderung an das Geschäftssystem auf der Grundlage der entsprechenden Prüfungsabfrageverkehre;
wobei die Überwachungsdaten der Leistung Folgendes umfassen: Ressourcenkategorie-Überwachungsdaten, die eines der Folgenden einschließen: eine Nutzungsrate einer Zentraleinheit, CPU, und eine Speichernutzungsrate jedes Geschäftsmoduls in dem Geschäftssystem; und
wobei das Bestimmen (103) der Abfragekapazitätsinformationen des Geschäftssystems auf der Grundlage der voreingestellten Belastungsprüfungskonfigurationsinformationen und der Überwachungsdaten des Verhaltens Folgendes umfasst:
Bestimmen (303) eines Ressourcenengpassmoduls des Geschäftssystems auf der Grundlage von Änderungen der Ressourcenkategorie-Überwachungsdaten der unterschiedlichen Geschäftsverarbeitungsmodule des Geschäftssystems bei Änderungen des Prüfungsabfrageverkehrs, wobei ein Abfrageverkehr der Belastungsprüfungsanforderung innerhalb eines Bereichs, der durch die in den Belastungsprüfungskonfigurationsinformationen konfigurierte Obergrenze des Abfrageverkehrs begrenzt ist, schrittweise erhöht wird und ein Geschäftsverarbeitungsmodul, bei dem mit der Erhöhung des Prüfungsabfrageverkehrs zuerst eine plötzliche Änderung auftritt, als das Ressourcenengpassmodul des Geschäftssystems bestimmt wird.

2. Verfahren nach Anspruch 1, wobei das Bestimmen (103) der Abfragekapazitätsinformationen des Geschäftssystems auf der Grundlage der voreingestellten Belastungsprüfungskonfigurationsinformationen und der Überwachungsdaten des Verhaltens ferner Folgendes umfasst:
Schätzen von Ressourcenexpansionsanforderungsinformationen des Geschäftssystems auf der Grundlage von Ressourcenkategorie-Überwachungsdaten, die dem Ressourcenengpassmodul entsprechen.

3. Verfahren nach einem der vorhergehenden Ansprüche, ferner umfassend:
Erfassen der voreingestellten Belastungsprüfungskonfigurationsinformationen, die durch einen Benutzer des Geschäftssystems konfiguriert wurden.

4. Vorrichtung zur Belastungsprüfung, wobei die Vorrichtung Folgendes aufweist:
eine Anforderungseinheit (501), die dazu konfiguriert ist, auf der Grundlage voreingestellter Belastungsprüfungskonfigurationsinformationen eine Belastungsprüfungsanforderung an ein Geschäftssystem in einem Cloud-Dienst zu initiieren (101), wobei die voreingestellten Belastungsprüfungskonfigurationsinformationen Prüfungsabfrageverkehre umfassen, wobei die Belastungsprüfungskonfigurationsinformationen, die einem bestimmten Prüfungsabfrageverkehr entsprechen, Folgendes einschließen: ein Belastungsprüfungsobjekt, einen Belastungsprüfungsinhalt, eine Obergrenze des Verkehrs, ein Verkehrsverhältnis, einen Schwellenwert der Antwortzeit und einen Verhältnisschwellenwert eines zurückgegebenen Fehlers, wobei das Geschäftssystem ein System ist, das Cloud-Dienst-Ressourcen gemeinsam nutzt und eine bestimmte Funktion wie etwa Zahlung, Speicherung und Berechtigung implementiert, und wobei das Geschäftssystem unterschiedliche Geschäftsverarbeitungsmodule einschließt;
eine Erfassungseinheit (502), die dazu konfiguriert ist, Überwachungsdaten eines Verhaltens des Geschäftssystems beim Antworten auf die Belastungsprüfungsanforderung zu erfassen (102); und
eine Bestimmungseinheit (503), die dazu konfiguriert ist, auf der Grundlage der voreingestellten Belastungsprüfungskonfigurationsinformationen und der Überwachungsdaten des Verhaltens Abfragekapazitätsinformationen des Geschäftssystems zu bestimmen (103),
wobei die Anforderungseinheit (501) ferner dazu konfiguriert ist, die Belastungsprüfungsanforderung jeweilig auf der Grundlage von Prüfungsabfrageverkehren an das Geschäftssystem zu initiieren;
wobei die Überwachungsdaten der Leistung Folgendes umfassen: Ressourcenkategorie-Überwachungsdaten, die eines der Folgenden einschließen: eine Nutzungsrate einer Zentraleinheit, CPU, und eine Speichernutzungsrate jedes Geschäftsmoduls in dem Geschäftssystem; und
wobei die Bestimmungseinheit (503) ein Ressourcenmodul aufweist, das dazu konfiguriert ist, ein Ressourcenengpassmodul des Geschäftssystems auf der Grundlage von Änderungen der Ressourcenkategorie-Überwachungsdaten der unterschiedlichen Geschäftsverarbeitungsmodule des Geschäftssystems bei Änderungen des Prüfungsabfrageverkehrs zu bestimmen (303), wobei ein Abfrageverkehr der Belastungsprüfungsanforderung innerhalb eines Bereichs, der durch die in den Belastungsprüfungskonfigurationsinformationen konfigurierte Obergrenze des Abfrageverkehrs begrenzt ist, schrittweise erhöht wird und ein Geschäftsverarbeitungsmodul, bei dem mit der Erhöhung des Prüfungsabfrageverkehrs zuerst eine plötzliche Änderung auftritt, als das Ressourcenengpassmodul des Geschäftssystems bestimmt wird.

5. Vorrichtung nach Anspruch 4, wobei die Bestimmungseinheit (503) ferner Folgendes aufweist:
ein Expansionsmodul, das dazu konfiguriert ist, Ressourcenexpansionsanforderungsinformationen des Geschäftssystems auf der Grundlage von Ressourcenkategorie-Überwachungsdaten zu schätzen, die dem Ressourcenengpassmodul entsprechen.

6. Vorrichtung nach einem der Ansprüche 4-5, ferner umfassend:
eine Konfigurationseinheit, die dazu konfiguriert ist, die voreingestellten Belastungsprüfungskonfigurationsinformationen zu erfassen, die durch einen Benutzer des Geschäftssystems konfiguriert wurden.

7. Elektronische Vorrichtung, umfassend:
mindestens einen Prozessor; und
einen Speicher, der kommunikativ mit dem mindestens einen Prozessor verbunden ist; wobei
der Speicher Anweisungen speichert, die durch den mindestens einen Prozessor ausführbar sind, wobei die Anweisungen, wenn sie durch den mindestens einen Prozessor ausgeführt werden, den mindestens einen Prozessor veranlassen, das Verfahren nach einem der Ansprüche 1-3 durchzuführen.

8. Nichtflüchtiges computerlesbares Speichermedium, das Computeranweisungen speichert, wobei die Computeranweisungen dazu verwendet werden, den Computer zu veranlassen, das Verfahren nach einem der Ansprüche 1-3 durchzuführen.

## Revendications

1. Procédé de test de charge, comprenant les étapes suivantes :
initier (101) une demande de test de charge à un système métier dans un service en nuage sur la base d'informations de configuration de test de charge prédéfinies, les informations de configuration de test de charge prédéfinies comprenant des trafics de requête de test, dans lequel les informations de configuration de test de charge correspondant à un certain trafic de requête de test comportent : un objet de test de charge, un contenu de test de charge, une limite supérieure du trafic, un rapport de trafic, un seuil du temps de réponse et un seuil de rapport d'une erreur renvoyée, dans lequel le système métier est un système qui partage des ressources de service en nuage et qui met en œuvre une certaine fonction telle qu'un paiement, un stockage et une autorisation, et le système métier comporte différents modules de traitement métier ;
acquérir (102) des données de surveillance d'une performance du système métier répondant à la demande de test de charge ; et
déterminer (103) des informations de capacité de requête du système métier sur la base des informations de configuration de test de charge prédéfinies et des données de surveillance de la performance,
dans lequel l'initiation (101) de la demande de test de charge au système métier dans le service en nuage sur la base des informations de configuration de test de charge prédéfinies comprend ce qui suit :
initier (301) respectivement la demande de test de charge au système métier sur la base des trafics de requête de test respectifs ;
les données de surveillance de la performance comprennent : des données de surveillance par catégorie de ressources comportant l'un quelconque des éléments suivants : un taux d'utilisation d'unité de traitement centrale, CPU, un taux d'utilisation de mémoire de chaque module métier dans le système métier ; et
la détermination (103) des informations de capacité de requête du système métier sur la base des informations de configuration de test de charge prédéfinies et des données de surveillance de la performance comprend ce qui suit :
déterminer (303) un module de goulot d'étranglement de ressources du système métier sur la base des modifications des données de surveillance par catégorie de ressources des différents modules de traitement métier du système métier suivant les modifications du trafic de requête de test, dans lequel le trafic de requête de la demande de test de charge est progressivement augmenté dans une plage limitée dans la limite supérieure du trafic de requête configurée dans les informations de configuration de test de charge, et le module de traitement métier qui subit en premier une modification soudaine suivant l'augmentation du trafic de requête de test est déterminé comme étant le module de goulot d'étranglement de ressources du système métier.

2. Procédé selon la revendication 1, dans lequel la détermination (103) des informations de capacité de requête du système métier sur la base des informations de configuration de test de charge prédéfinies et des données de surveillance de la performance comprend en outre ce qui suit :
estimer des informations de besoins d'extension de ressources du système métier sur la base de données de surveillance par catégorie de ressources correspondant au module de goulot d'étranglement de ressources.

3. Procédé selon l'une quelconque des revendications précédentes, comprenant en outre l'étape suivante :
acquérir les informations de configuration de test de charge prédéfinies configurées par un utilisateur du système métier.

4. Appareil de test de charge, l'appareil comprenant :
une unité de demande (501) configurée pour initier (101) une demande de test de charge à un système métier dans un service en nuage sur la base d'informations de configuration de test de charge prédéfinies, les informations de configuration de test de charge prédéfinies comprenant des trafics de requête de test, dans lequel les informations de configuration de test de charge correspondant à un certain trafic de requête de test comportent : un objet de test de charge, un contenu de test de charge, une limite supérieure du trafic, un rapport de trafic, un seuil du temps de réponse et un seuil de rapport d'une erreur renvoyée, dans lequel le système métier est un système qui partage des ressources de service en nuage et qui met en œuvre une certaine fonction telle qu'un paiement, un stockage et une autorisation, et le système métier comporte différents modules de traitement métier ;
une unité d'acquisition (502) configurée pour acquérir (102) des données de surveillance d'une performance du système métier répondant à la demande de test de charge ; et
une unité de détermination (503) configurée pour déterminer (103) des informations de capacité de requête du système métier sur la base des informations de configuration de test de charge prédéfinies et des données de surveillance de la performance,
l'unité de demande (501) est en outre configurée pour initier respectivement la demande de test de charge au système métier sur la base de trafics de requête de test ;
les données de surveillance de la performance comprennent : des données de surveillance par catégorie de ressources comportant l'un quelconque des éléments suivants : un taux d'utilisation d'unité de traitement centrale, CPU, un taux d'utilisation de mémoire de chaque module métier dans le système métier ; et
l'unité de détermination (503) comprend un module de ressources configuré pour déterminer (303) un module de goulot d'étranglement de ressources du système métier sur la base des modifications des données de surveillance par catégorie de ressources des différents modules de traitement métier du système métier suivant les modifications du trafic de requête de test, dans lequel le trafic de requête de la demande de test de charge est progressivement augmenté dans une plage limitée dans la limite supérieure du trafic de requête configurée dans les informations de configuration de test de charge, et le module de traitement métier qui subit en premier une modification soudaine suivant l'augmentation du trafic de requête de test est déterminé comme étant le module de goulot d'étranglement de ressources du système métier.

5. Appareil selon la revendication 4, dans lequel l'unité de détermination (503) comprend en outre :
un module d'extension configuré pour estimer des informations de besoins d'extension de ressources du système métier sur la base de données de surveillance par catégorie de ressources correspondant au module de goulot d'étranglement de ressources.

6. Appareil selon l'une quelconque des revendications 4 et 5, comprenant en outre :
une unité de configuration configurée pour acquérir les informations de configuration de test de charge prédéfinies configurées par un utilisateur du système métier.

7. Dispositif électronique, comprenant :
au moins un processeur ; et
une mémoire connectée en communication à l'au moins un processeur ; dans lequel,
la mémoire stocke des instructions exécutables par l'au moins un processeur qui, lorsqu'elles sont exécutées par l'au moins un processeur, amènent l'au moins un processeur à mettre en œuvre le procédé selon l'une quelconque des revendications 1 à 3.

8. Support de stockage non transitoire lisible par ordinateur stockant des instructions informatiques, les instructions informatiques étant utilisées pour amener l'ordinateur à mettre en œuvre le procédé selon l'une quelconque des revendications 1 à 3.
